# EUROPÄISCHE PATENTANMELDUNG

(11) **EP 2 660 130 A1**
(43) Veröffentlichungstag der Anmeldung: **06.11.2013**
(21) Anmeldenummer: 13166497.1
(22) Anmeldetag: 03.05.2013
(51) Int. Cl.: B62D 33/063, B62D 55/065, B62D 55/12, B62D 55/15, B62D 11/20

(54) **Zweispuriges Fahrzeug mit Raupenketten**

(30) Priorität: 05.05.2012 CH 6212012
(71) Anmelder: Geoplan Schweiz AG, 8832 Wollerau (CH)
(72) Erfinder: Reichmuth, Roger, 8735 ST Gallenkappel (CH); Diethelm, Anton, 8854 Galgenen (CH); Billaud, René, 9056 Gais (CH)
(74) Vertreter: Liebetanz, Michael

(57) **Zusammenfassung**

Ein zweispuriges Fahrzeug hat mindestens einem Antrieb, wobei der oder die Antriebe mit vier voneinander unabhängigen Tracksystemen (21, 22, 23) wirkverbunden sind, wobei von diesen Tracksystemen (21, 22, 23) bevorzugt vier steuerbar sind Das Fahrzeug verfügt über ein selbsttragendes Chassis, auf dem der oder die Antriebe montiert sind, die über einzelne Achsen mit mindestens einem Antriebsrad jedes Tracksystems (21, 22, 23) wirkverbunden sind. Jedes Antriebsrad jedes Tracksystems (21) ist auf einem Tracksystem-Befestigungsrahmen mit einem darunter angeordneten Ablaufrad drehbar gelagert, so dass die Drehbarkeit dieser Maschine erleichtert ist. Wenn dann der Führerstand (11) drehbar ausgestaltet ist, kann die Maschine in einfacher Weise durch den Bediener in beiden Fahrtrichtungen einfach gesteuert werden.

## Beschreibung

### TECHNISCHES GEBIET

Die vorliegende Erfindung betrifft ein zweispuriges Fahrzeug mit Raupenketten, insbesondere ein Fahrzeug mit mindestens einem Antrieb, wobei der oder die Antriebe mit vier voneinander unabhängigen Tracksystemen wirkverbunden sind, wobei von diesen Tracksystemen wenigstens zwei steuerbar sind.

### STAND DER TECHNIK

Traktoren und Bulldozer können schwere bis sehr schwere selbstfahrende Fahrzeuge sein, die, wenn sie sich über Reifen auf dem Boden abstützen, einen hohen Bodendruck erzeugen. Daher gibt es im Stand der Technik Bestrebungen, einen solchen Bodendruck zu vermindern, indem wie in der CA 2,677,425 beschrieben, die Räder oder Reifen solcher Fahrzeuge durch jeweils eine Zuganordnung oder Tracksystem ersetzt wird, bei der für jeden Reifen oder Rad eine in Längsbewegungsrichtung verlaufende Raupenkette vorgesehen ist, die von einem mit der Antriebsachse verbundenen Kettenrad angetrieben wird. Die Achse jedes Kettenrades ist mit einem Kettenrahmen verbunden, auf dem die weiteren Elemente der Raupenkette wie Umlenkrollen und untere Führungsrollen angeordnet sind. Jedes Tracksystem ersetzt vollkommen unabhängig ein Rad eines solchen Fahrzeugs. Voneinander unabhängig bedeutet in diesem Zusammenhang, dass auf jeder Spurseite mindestens zwei getrennte Tracksysteme vorgesehen sind.

Aus der zeitgleich angemeldeten CA 2,677,421 ist ein Stabilisierungssystem für eine Zuganordnung nach CA 2,677,425 bekannt, bei dem ein oder mehrere Stabilisierungsstäbe vom Chassis des Fahrzeugs in den Kettenrahmen eingreifen und dessen Bewegungsradius beschränken, also neben der Verbindung eines angetriebenen Kettenrades noch einen angelenkten Stab umfasst.

WO 2011/000093 beschreibt schliesslich ein weiteres Tracksystem mit einer Stabverbindung eines Federungs- und/oder Steuersystems.

WO 2006/066306 zeigt ein Fahrzeug mit vier Tracksystemen mit negativem Sturz.

Ein Fahrzeug mit einem Tracksystem mit Merkmalen des Anspruchs 1 ist in der US 2002/070059 dargestellt.

Die US 4,560,211 zeigt ein Fahrzeug mit einem um seine Hauptachse verschwenkbaren Führerstand, welcher über den in normaler Fahrtrichtung hinteren Reifen angeordnet ist.

US 6,283,562, US 2010/012399, US 2008/196947 und US 2005/056468 zeigen Tracksysteme beziehungsweise Fahrzeuge mit Tracksystemen.

Diese Fahrzeuge weisen insbesondere auf weichem Boden eine verbesserte Fahreigenschaft auf, sind aber nur schlecht skalierbar, also auf grössere und sehr schwere Fahrzeuge übertragbar.

### DARSTELLUNG DER ERFINDUNG

Ausgehend von diesem Stand der Technik liegt der Erfindung die Aufgabe zugrunde ein Fahrzeug mit mindestens vier Tracksystemen zu schaffen, von denen wenigstens zwei steuerbar sind, und bei denen das Fahrzeug unabhängig von einem zum Beispiel sehr grossen Gewicht von über 10 Tonnen einfach handhabbar bleibt.

Diese Aufgabe wird erfindungsgemäss für ein Fahrzeug der eingangs genannten Art dadurch gelöst, dass das Fahrzeug über ein selbsttragendes Chassis verfügt, auf dem der oder die Antriebe montiert sind, von denen mindestens zwei Tracksysteme über einzelne Achsen mit mindestens einem Antriebsrad dieser Tracksysteme wirkverbunden sind, und dass jedes Antriebsrad dieser Tracksysteme auf einem Tracksystem-Befestigungsrahmen drehbar gelagert ist, welcher Tracksystem-Befestigungsrahmen mit einem komplementären, insbesondere lenkbaren Montageelement des Chassis fest verbunden ist, und dass auf jedem Tracksystem-Befestigungsrahmen mindestens ein Ablaufrad der Raupenkette unterhalb des jeweiligen Antriebsrades lasttragend drehbar montiert ist.

Dabei sind also die zwei Tracksysteme, beispielsweise die beiden vorderen Tracksysteme lenkbar, während die anderen beiden hier hinteren Tracksysteme auf einer Starrachse montiert sein können oder ebenfalls auf einer Lenkachse. Das ist unabhängig davon, ob eine Einzelsystemaufhängung vorgesehen ist.

Das Antriebsrad kann auf einer Nabe für eine Drehmomentübertragung gelagert werden. Dabei kann der Tracksystem-Befestigungsrahmen über eine Chassisverbindungsplatte und eine Rollenmontageplatte verfügen, zwischen denen optional eine Schwinge montiert ist.

Dabei hat die Raupenkette eines Tracksystems über nach innen gerichtete Finnen und das Antriebsrad weist eine längs in Umfangrichtung vorgesehene Abfolge von die Finnen aufnehmenden Schlitze auf.

Vorteilhafterweise sind bei einem Fahrzeug die Raupenkette eines Tracksystems jeweils ein Dreiecktracksystem.

Bei einem Fahrzeug nach einem Ausführungsbeispiel ist das mit dem Chassis tragend fest verbundene Montageelement über mindestens eine Anlenkung mit dem Chassis verbunden, wobei die Antriebsachse für das mindestens eine Antriebsrad jedes Tracksystems parallel zu der Anlenkung oder innerhalb der Anlenkung zu der Nabe des Antriebsrads geführt ist. Somit sind die einzelnen Tracksysteme unabhängig voneinander lenkbar. Es ist möglich, dass ein zusätzlicher Hydraulikzylinder vorgesehen ist, der zwischen Chassis und Befestigungsplatte angeordnet ist, um das Lenken der Tracksysteme zu unterstützen. Es sollte in diesem Zusammenhang nicht vergessen werden, dass es sich bei gebauten Testausführungsformen um eingesetzte Dreiecksysteme handelt, die über 160 Zentimeter hoch sind, 240 Zentimeter lang und das Antriebsrad einen Radius von 62,5 Zentimeter hat. Diese vier Tracksysteme sind Teil eines über 20 Tonnen schweren Fahrzeugs.

Bei einem Fahrzeug nach einem Ausführungsbeispiel der Erfindung sind vorzugsweise von vier Tracksystemen alle vier steuerbar. Dabei ist dann vorteilhafterweise der Führerstand auf dem Chassis oberhalb desselben um 180 Grad drehbar oder verschwenkbar angeordnet. Dann kann der Fahrer im Führerstand durch Drehung desselben die vorher als "rückwärts" zu bezeichnende Bewegungsrichtung des Fahrzeugs wiederum "vorwärts" angehen. Bei einer Drehbarkeit ist die Hauptachse des Führerstandes auch die Drehachse; beim Verschwenken ist sie es nicht, sondern seitlich oder in Längsrichtung verschoben.

Besonders vorteilhaft ist die Verbindung des Einsatzes von vier lenkbaren Tracksystemen im Zusammenhang mit einem Führerstand, der auf dem Chassis oberhalb desselben um 180 Grad drehbar oder verschwenkbar angeordnet ist. Dann ist in beiden Sitzrichtungen jeweils die vor dem Fahrer in Blickrichtung angeordnete Achse eine Lenkachse mit zwei lenkbaren Tracksystemen. Insbesondere können dann die jeweils entgegen der Blickrichtung befindlichen zwei Tracksysteme parallel eingestellt und festgestellt werden, so dass diese jeweils nicht mehr lenkbar sind. Damit sind in beiden Fahrtrichtungen jeweils die beiden in Vorwärts-Fahrtrichtung befindlichen Tracksysteme lenkbar, während die anderen beiden jeweils relativ zur Fahrtrichtung hinteren Tracksysteme nicht lenkbar eingerastet sind. Das ist unabhängig davon, ob eine Einzelsystemaufhängung vorgesehen ist.

Dann sind vor dem Führerstand und hinter dem Führerstand jeweils mindestens ein Paar von Tracksystemen vorgesehen, die steuerbar sind. Bei einer bevorzugten Ausgestaltung sind alle diese besagten Tracksysteme parallel ausrichtbar und dann unlenkbar feststellbar. Diese Feststellung wird dabei jeweils für das Paar von steuerbaren Tracksystemen, welches jeweils in der durch die Führerstandausrichtung vorgegebenen Rückwärtsfahrtrichtung angeordnet ist, aktiviert.

Dabei ist von Vorteil, dass die Tracksysteme die genannte Aufhängung mit einem komplementären, insbesondere lenkbaren Montageelement des Chassis haben und auf jedem Tracksystem-Befestigungsrahmen mindestens ein Ablaufrad der Raupenkette unterhalb des jeweiligen Antriebsrades lasttragend drehbar montiert ist. Damit kann in einfacher Weise besonders bodenschonend manöviert werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische perspektivische Ansicht eines Fahrzeugs gemäss einem Ausführungsbeispiel der Erfindung;
- Fig. 2: eine schematische Seitenansicht des Fahrzeugs nach Fig. 1;
- Fig. 3: eine schematische Draufsicht auf das Fahrzeug nach Fig. 1;
- Fig. 4: eine schematische perspektivische Ansicht der Aufhängung eines Tracksystems für ein Fahrzeug nach Fig. 1;
- Fig. 5: eine weitere schematische perspektivische Ansicht der Aufhängung nach Fig. 4;
- Fig. 6: eine schematische perspektivische Ansicht der Aufhängung nach Fig. 4 mit daran befestigtem Tracksystem;
- Fig. 7: eine schematische perspektivische Ansicht eines Tracksystems für ein Fahrzeug nach Fig. 1 und eine Aufhängung nach Fig. 4; und
- Fig. 8: eine schematische Seitenansicht des Tracksystems nach Fig. 7.

### BESCHREIBUNG BEVORZUGTER AUSFÜHRUNGSFORMEN

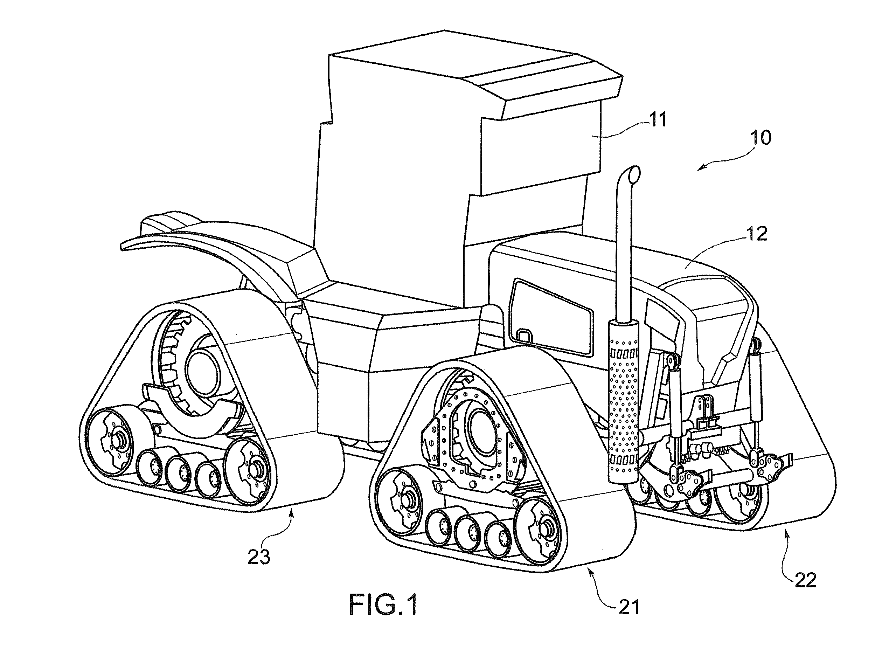

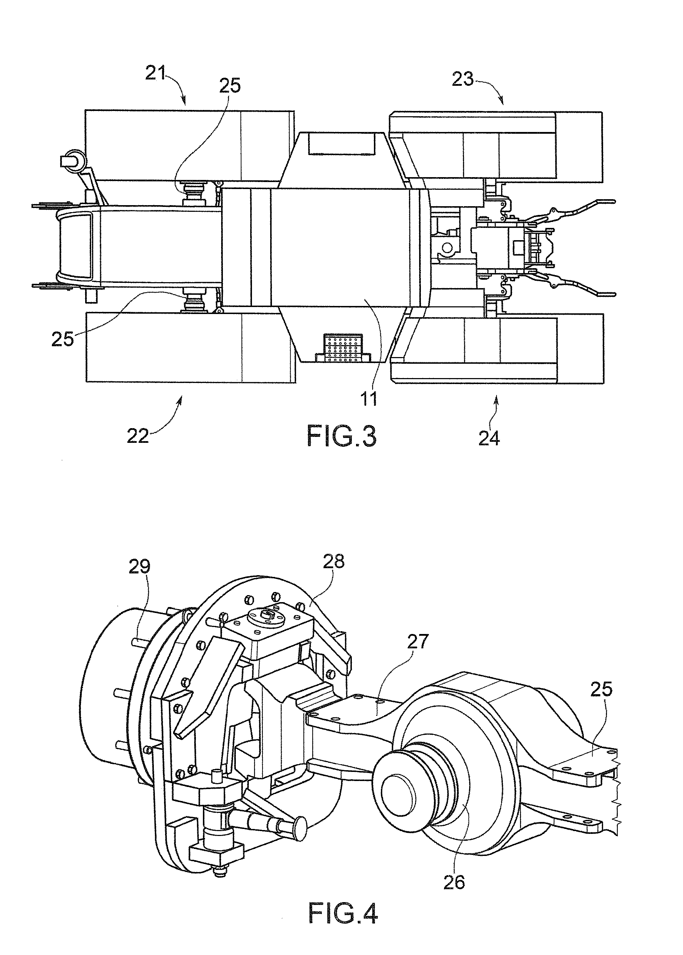

Die Fig. 1 zeigt eine schematische perspektivische Ansicht eines zweispurigen Fahrzeugs 10 gemäss einem Ausführungsbeispiel der Erfindung. Das Fahrzeug 10 weist mindestens einen Antrieb auf, der hier mit seiner Haube 12 als Bezugszeichen bezeichnet ist. Das Fahrzeug wird über einen zentralen Führerstand 11 gelenkt. Der Antrieb 12 ist mit vier voneinander unabhängigen Tracksystemen 21, 22, 23 und 24 (letzterer in Fig. 3 sichtbar) wirkverbunden. Dabei sind - wie bei einem Fahrzeug mit Rädern - von diesen Tracksystemen 21, 22 wenigstens die zwei vorderen steuerbar.

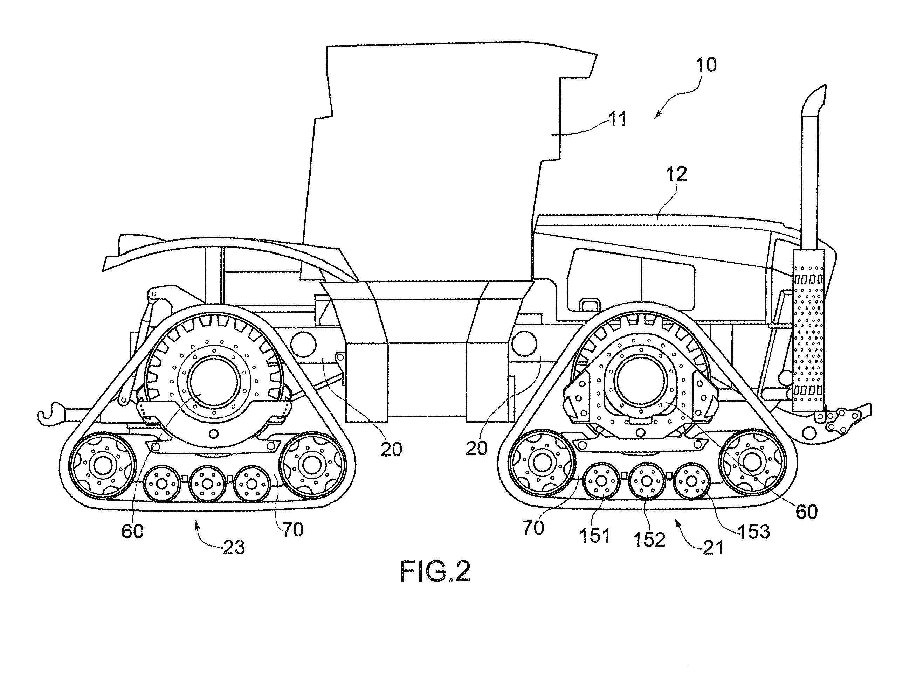

Die Fig. 2 zeigt eine schematische Seitenansicht des Fahrzeugs 10 nach Fig. 1 und Fig. 3 eine schematische Draufsicht auf das Fahrzeug nach Fig. 1. In der Seitenansicht ist zu erkennen, dass das Fahrzeug 10 über ein selbsttragendes Chassis 20 verfügt, auf dem der oder die Antriebe 12 montiert sind und ggf. auch der Führerstand 11, der drehbar montiert sein kann, insbesondere, wenn auch die hinteren Tracksysteme 23 und 24 lenkbar sind.

Der Motor 12 ist über die einzelnen Achsen 25 des Chassis 20 mit mindestens einem Antriebsrad 60 jedes Tracksystems 21, 22, 23, 24 wirkverbunden. Jedes Antriebsrad 60 jedes Tracksystems 21, 22, 23, 24 ist dabei auf einem Tracksystem-Befestigungsrahmen 70 drehbar gelagert. Auf jedem Tracksystem-Befestigungsrahmen 70 ist mindestens ein Ablaufrad, hier mindestens die Ablaufräder 151-153 der Raupenkette 50 unterhalb des jeweiligen Antriebsrades 60 lasttragend drehbar montiert.

Dieser Tracksystem-Befestigungsrahmen 70 ist über seine Platte 38 mit dem komplementären, insbesondere lenkbaren Montageelement 28 des Chassis 20 fest verbunden. Zusätzlich kann das mit dem Chassis 20 tragend fest verbundene Montageelement 28 über mindestens eine Anlenkung mit dem Chassis 20 verbunden sein. Diese Anlenkung kann dann eine insbesondere hydraulische Lenkunterstützung für die Lenk-Drehung des Montageelementes 28 aufweisen, denn die Kombination der Platten 28 und 38 tragen an allen vier (oder mehr) Tracksystemen das volle Gewicht des Fahrzeugs.

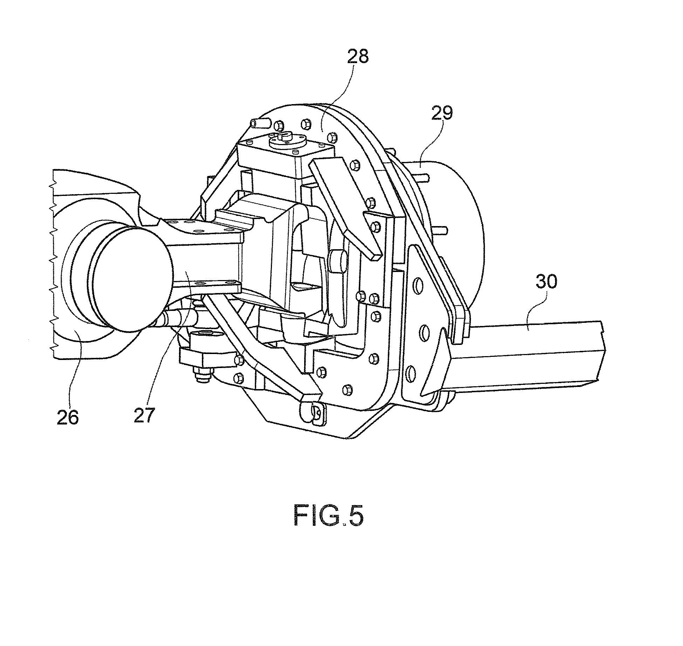

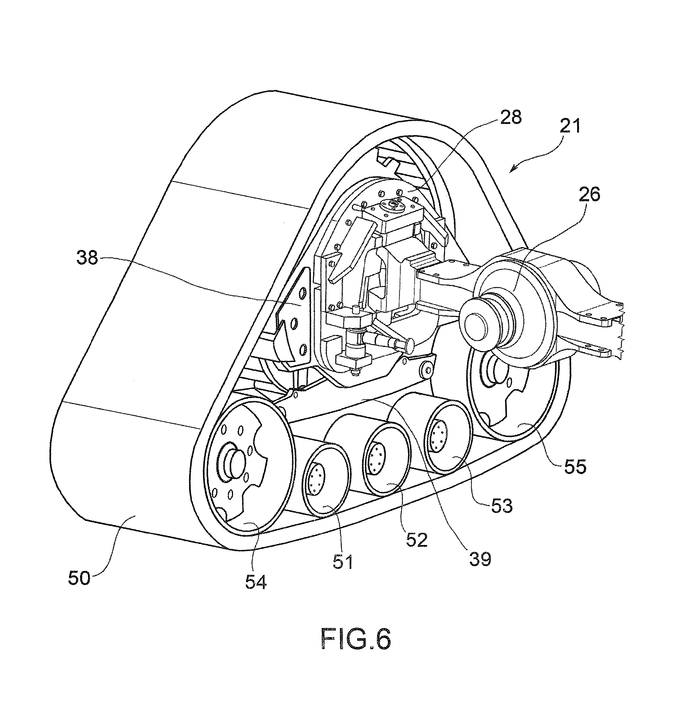

Die Fig. 4 zeigt eine schematische perspektivische Ansicht der Aufhängung eines Tracksystems 21 bis 24 für ein Fahrzeug 10 nach Fig. 1. Die Fig. 5 zeigt dabei eine weitere schematische Ansicht der Aufhängung nach Fig. 4 aus einer anderen Perspektive und die Fig. 6 zeigt die schematische perspektivische Ansicht der Aufhängung nach Fig. 4 mit daran befestigtem Tracksystem 21.

Der hohle Verbindungsträger 25 ist mit einem Kugelgelenk 26 verbunden und geht in einen radinnenseitigen hohlen Verbindungsträger über. Dieser ist fest, beziehungsweise schwenkbar mit einer Chassisbefestigungsplatte 28 verbunden. Durch die Träger 25 und 27 reicht ein (in den Figuren weil innen nicht dargestellter) Antriebsstrang des Motors 12. Dieser wird in der Platte 28 gelagert, durch eine zentrale Öffnung hindurchgeleitet und endet in einer Nabe 29 für das Antriebsrad 60.

Mit anderen Worten, das Antriebsrad 60 dreht sich durch den über die Nabe 29 vermittelten Antrieb, der lastfrei durch die Platte 28 hindurchgeführt wird und über die Träger 26 und 25 von dem Antrieb 12 ausgeht, der auf dem Chassis 20 fest befestigt ist. Es können auch einzelne Antriebe im Bereich 26 vorgesehen sein, die einzeln jedes Tracksystem und jede Raupe ansteuern.

In anderen in den Zeichnungen nicht dargestellten Ausführungsbeispielen können zwei Tracksysteme, beispielsweise die "hinteren" Tracksysteme, auf einer Starrachse vorgesehen sein. Dabei sind die Naben 29 beider Tracksysteme 23, 24 dieser Achse drehbar mit einem starren Achskörper verbunden. Auch in diesem Fall ist jedes Tracksystem 23 oder 24 über die Platte 28 mit dem Chassis 20 verbunden und die Starrachse mit den Naben ist lastfrei in Bezug auf das Chassis 20.

Ist diese Achse eine angetriebene Achsen besteht auch hier der Achskörper aus einem Rohr zu jedem Tracksystem, durch das eine Halbwelle führt und über die Nabe 29 das Antriebsrad 60 antreibt.

In der Fig. 5 ist zudem das seitliche Schild 30 der Befestigungsplatte 28 zu sehen.

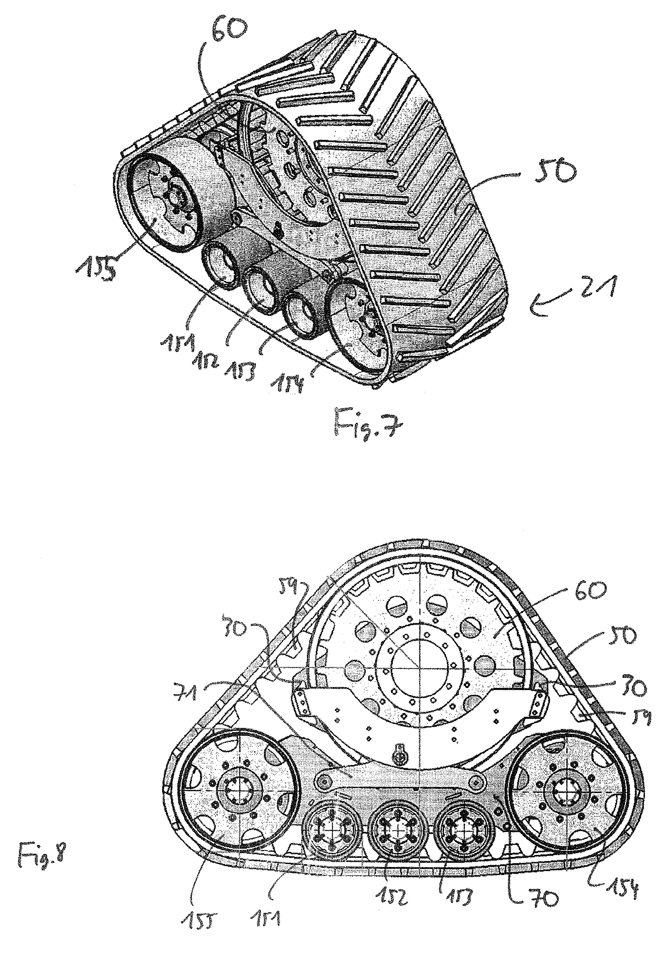

Die Fig. 7 zeigt eine schematische perspektivische Ansicht eines Tracksystems 21 für ein Fahrzeug 10 nach Fig. 1 und eine Aufhängung nach Fig. 4; und Fig. 8 zeigt eine schematische Seitenansicht des Tracksystems 21 nach Fig. 7.

Die Raupenkette 50 wird um das breite obere Antriebsrad 60 herumgeführt. Die beiden weiteren Endumlenkpunkte der Raupenkette 50 sind durch die innen gelegenen und die aussen gelegenen grösseren Umlenkrollen 54-55 und 154-155 vorgegeben. Dabei sind die genannten Rollen 51 bis 55 und 151 bis 155 auf beiden Seiten eines unteren Tracksystem-Befestigungsrahmens 70 drehbar angeordnet. Der Antrieb wird über ein gelochtes oder besser längs-geschlitztes Antriebsrad 60 besorgt, in dem Finnen 59 nach innen überstehen und in die Ausnehmungen im Rad 60 eingreifen und im unteren Bereich zwischen den Rollen 51 bis 55 und 151 bis 155 angeordnet sind.

Dabei ergibt sich ein Zusammenbau von Tracksystem 21 und Chassis 20 wie folgt. Die drehbare und damit lenkbare Chassisplatte 28 verfügt über eine Reihe von Verbindungslöchern (oder -bolzen), die kongruent und deckungsgleich zu entsprechenden Verbindungslöchern (oder -bolzen) auf einer Tracksystem-Befestigungsplatte 38 sind, so dass der Befestigungsrahmen 38, 70 der Tracksysteme 21 bis 24 mit dem Chassis 20 verbunden werden.

Der Vorteil der vorliegenden Erfindung liegt nun daran, dass die gesamte Last des Fahrzeugs 10 auf dem Chassis 20 ruht und über die Verbindungsträger 25 und 27 auf die vier Befestigungsplatten 28 übertragen wird. Jede Befestigungsplatte 28 des Chassis 20 ist mit der komplementären Befestigungsplatte 38 der Tracksysteme verbunden, die wiederum jeweils unterhalb der Achse des Antriebsrades 60 über eine Schwinge 71 mit einer Tracksystemlagerplatte 70 verbunden ist, mit der die Last von der Befestigungsplatte 28 des Chassis 20 über mindestens eine Rolle 51, hier die Rollen 51 bis 55 und 151 bis 155, auf die untere Fläche der Raupenkette 50 und damit auf den darunter befindlichen Boden übertragen wird. Es ist direkt ersichtlich, dass durch die Drehlagerung des Antriebsrades 60 in der Platte 28 auf der Nabe 29 dieses Antriebsrad 60 jeweils keine Lastkräfte übernehmen muss, sondern ausschliesslich das Drehmoment über die Nut-Feder-Kombination von geschlitztem Antriebsrad 60 und Raupe mit Finnen übertragen wird. Damit kann auch bei schweren Fahrzeugen mit Gewichten über 10 bis 50 Tonnen eine sichere Lagerung und ein effizienter Antrieb auf jedem Tracksystem realisiert werden. Bei hoher Last kann es sich ergeben, dass die Lagerung der Achsen 27 nur ein schwergängiges Verschwenken der Platte 28 und damit des Tracksystems ermöglichen. Dann kann zusätzlich zwischen Chassis 20 und der Platte 28 ein Steuerzylinder vorgesehen sein.

Das Chassis 20 umfasst also mindestens vier mit diesem verbundenen Befestigungsplatten 28, die starr mit dem Chassis 20 verbunden sein können, eine Einzelaufhängung umfassen oder mit einer Lenkachse verbunden sind. Das Fahrzeuggewicht wird also auf diese Befestigungsplatten 28 übertragen, die fest mit den komplementären Befestigungsplatten 38 der Tracksysteme 21, 22, 23, 24 verbunden werden. Diese Befestigungsplatten 38 sind entweder direkt oder mit einer Schwinge 71 mit jeweils einer Tracksystemlagerplatte 70 verbunden. Diese verfügen über Lager für die Ablaufrollen 51 bis 53 und 151 bis 153; die weiteren Rollen 54, 55 und 154, 155 können an dieser Tracksystemlagerplatte 70 oder an einer Verbindungsplatte der Befestigungsplatten 38 gelagert sein. Diese Laufrollen 51 bis 53 bzw. 151 bis 153 können auch pendelnd oder gefedert montiert sein.

Die Schwinge 71 bietet neben der lastfreien Lagerung der Nabe 29 ein weiteres federndes Element, welches sicherstellt, dass die Raupenkette über die lasttragenden Rollen 51-55 und 151-155 auf beiden Seiten der Tracksystemlagerplatte 70 gegenüber dem Antriebsrad 60 gespannt ist.

Ein weiterer Vorteil des Fahrzeugs 10 gemäss einem weiteren unabhängigen Ausführungsbeispiel gemäss der Erfindung liegt darin, dass auf Grund der vier unabhängig lenkbaren Tracksystemen 21, 22, 23 und 24 sehr einfach die Fahrtrichtung des Fahrzeugs geändert werden kann. Dafür ist der Führerstand 11 verschwenkbar oder drehbar auf dem Chassis 20 befestigt. So kann der Führerstand 11 auf einer vertikal von dem Chassis 20 abstehenden Achse aufsitzen und um diese gedreht werden. Sofern diese Achse in der Mitte des Führerstandes 11 vorgesehen ist, dreht sich dieser um seine Hauptachse und kann somit nach "vorne" und nach "hinten" gedreht werden, wobei dann beide Richtungen Hauptbewegungsrichtungen sind. Sofern diese Achse exzentrisch zum Führerstand 11 vorgesehen ist, dreht sich dieser um diese Achse und wird in einer seitlich versetzten, um 180 Grad gedrehten Position wieder festgesetzt. Dies kann mechanisch durch Bolzen realisiert sein, die durch entsprechende Eingriffsösen hindurchgeführt werden.

Bei einem Fahrzeug nach einem solchen Ausführungsbeispiel der Erfindung sind vorzugsweise von vier Tracksystemen 21, 22, 23 und 24 alle vier steuerbar. Die sich durch die eingestellte Drehposition des Führerstandes 11 auf dem Chassis 20 ergebende normale Blickrichtung des Fahrers ist dann als die Vorwärtsrichtung definiert. Dann kann der Fahrer im Führerstand 11 1 durch Drehung desselben die vorher als "rückwärts" zu bezeichnende Bewegungsrichtung des Fahrzeugs wiederum "vorwärts" angehen. Bei dem genannten Einsatz von vier lenkbaren Tracksystemen 21, 22, 23 und 24 im Zusammenhang mit einem Führerstand 11, der auf dem Chassis 20 oberhalb desselben um 180 Grad drehbar oder verschwenkbar angeordnet ist, hat der Fahrer immer eine gelenkte Achse beziehungsweise einzeln lenkbare Tracksysteme 21, 22, 23 oder 24 vor sich. Insbesondere können dann die jeweils entgegen der Blickrichtung (also rückwärts) befindlichen zwei Tracksysteme parallel eingestellt und festgestellt werden, so dass diese jeweils nicht mehr lenkbar sind. Damit sind in beiden Fahrtrichtungen jeweils die beiden in Vorwärts-Fahrtrichtung befindlichen Tracksysteme lenkbar, während die anderen beiden jeweils relativ zur Fahrtrichtung hinteren Tracksysteme nicht lenkbar sondern in Parallelstellung eingerastet sind. Das ist unabhängig davon, ob für die einzelnen Tracksysteme 21, 22, 23 oder 24 eine Einzelsystemaufhängung vorgesehen ist.

**BEZUGSZEICHENLISTE**

| | | | |
|---|---|---|---|
| 10 | Fahrzeug | 38 | seitlicher Tracksystem- |
| 11 | Führerstand | | Befestigungsrahmen |
| 12 | Antrieb (Haube) | 39 | unterer Tracksystem-Befestigungsrahmen |
| 20 | Chassis | | |
| 21 | vorderes Tracksystem | 50 | Raupenkette |
| 22 | vorderes Tracksystem | 51-53 | Ablaufräder |
| 23 | hinteres Tracksystem | 54-55 | Ablaufräder |
| 24 | hinteres Tracksystem | 59 | Finnen |
| 25 | chassisseitiger Hohlverbindungsträger | 60 | Antriebsrad |
| | | 70 | Tracksystem-Befestigungsrahmen |
| 26 | Kugelgelenk | | |
| 27 | Radinnenseitiger Träger | 71 | Übertragungsschwinge |
| 28 | Chassis-Befestigungsplatte | 151-153 | Ablaufräder |
| 29 | Nabe für Antriebsrad | 154-155 | Ablaufräder |
| 30 | seitliches Schild | | |

## Patentansprüche

1. Zweispuriges Fahrzeug (10) mit mindestens einem Antrieb (12), wobei der oder die Antriebe (12) mit vier voneinander unabhängigen Tracksystemen (21, 22, 23, 24) wirkverbunden sind, wobei von diesen Tracksystemen (21, 22) wenigstens zwei steuerbar sind, **dadurch gekennzeichnet, dass** das Fahrzeug (10) über ein selbsttragendes Chassis (20; 25) verfügt, auf dem der oder die Antriebe (12) montiert sind, von denen mindestens zwei Tracksysteme (21, 22) über einzelne Achsen mit mindestens einem Antriebsrad (60) dieser Tracksysteme (21, 22) wirkverbunden sind, und dass jedes Antriebsrad (60) dieser Tracksystems (21, 22) auf einem Tracksystem-Befestigungsrahmen (39, 70) drehbar gelagert ist, welcher Tracksystem-Befestigungsrahmen (39, 70) mit einem komplementären, insbesondere lenkbaren Montageelement (28) des Chassis (20; 25) fest verbunden ist, und dass auf jedem Tracksystem-Befestigungsrahmen (39, 70) mindestens eine Ablaufrolle (51-53; 151-153; 54-55; 154-155) der Raupenkette unterhalb des jeweiligen Antriebsrades (60) lasttragend drehbar montiert ist.

2. Fahrzeug (10) nach Anspruch 1, **dadurch gekennzeichnet, dass** das Antriebsrad (60) auf einer Nabe (29) für eine Drehmomentübertragung gelagert wird.

3. Fahrzeug (10) nach Anspruch 2, **dadurch gekennzeichnet, dass** die Nabe (29) in dem Montageelement (28) drehbar gelagert ist.

4. Fahrzeug (10) nach einem der Ansprüche 1 bis 3, **dadurch gekennzeichnet, dass** der Tracksystem-Befestigungsrahmen über eine Chassisverbindungsplatte (38) und eine Rollenmontageplatte (70) verfügt.

5. Fahrzeug (10) nach Anspruch 4, **dadurch gekennzeichnet, dass** die Chassisverbindungsplatte (38) mit dem Tracksystem-Befestigungsrahmen (39, 70) fest verbunden ist.

6. Fahrzeug (10) nach Anspruch 4 oder 5, **dadurch gekennzeichnet, dass** zwischen Chassisverbindungsplatte (38) und Rollenmontageplatte (70) eine Schwinge (71) montiert ist.

7. Fahrzeug (10) nach einem der Ansprüche 4 bis 6, **dadurch gekennzeichnet, dass** die Ablaufrollen (51-53; 151-153; 54-55; 154-155) der Raupenkette auf der Rollenmontageplatte (70) lasttragend frei drehend montiert sind.

8. Fahrzeug (10) nach Anspruch 7, **dadurch gekennzeichnet, dass** auf jeder Seite der Rollenmontageplatte (70) die Ablaufrollen paarweise (51 bis 53 und 151 bis 153; 54-55 und 154-155) montiert sind.

9. Fahrzeug (10) nach Anspruch 7 oder 8, **dadurch gekennzeichnet, dass** die Ablaufrollen (51 bis 53 bzw. 151 bis 153) pendelnd oder gefedert montiert sind.

10. Fahrzeug (10) nach einem der Ansprüche 1 bis 9, **dadurch gekennzeichnet, dass** die Raupenkette (50) eines Tracksystems (21, 22, 23, 24) mittig in Ablaufrichtung über nach innen gerichtete Finnen (59) und das zugeordnete Antriebsrad (60) eine längs in Umfangsrichtung vorgesehene Abfolge von die Finnen (59) aufnehmenden Schlitze aufweisen.

11. Fahrzeug (10) nach einem der Ansprüche 1 bis 10, **dadurch gekennzeichnet, dass** die Raupenkette (50) eines jeden Tracksystems ein Dreiecktracksystem umfasst.

12. Fahrzeug (10) nach einem der Ansprüche 1 bis 11, **dadurch gekennzeichnet, dass** das mit dem Chassis (20) tragend fest verbundene Montageelement (28) über mindestens eine Anlenkung mit dem Chassis (20) verbunden ist, und dass die Antriebsachse für das mindestens eine Antriebsrad (60) jedes Tracksystems (21, 22, 23, 24) parallel zu der Anlenkung oder innerhalb der Anlenkung zu der Nabe geführt ist.

13. Fahrzeug (10) nach Anspruch 12, **dadurch gekennzeichnet, dass** eine Anlenkung eine insbesondere hydraulische Lenkunterstützung für die Lenk-Drehung des Montageelementes (28) aufweist.

14. Fahrzeug (10) nach einem der Ansprüche 1 bis 13, **dadurch gekennzeichnet, dass** vier Tracksysteme (21, 22, 23, 24) vorgesehen sind, dass alle vier Tracksysteme (21, 22, 23, 24) steuerbar sind, und dass der Führerstand (11) auf dem Chassis (20) um 180 Grad drehbar oder verschwenkbar angeordnet ist.

15. Fahrzeug (10) nach Anspruch 14, **dadurch gekennzeichnet, dass** vor dem Führerstand (11) und hinter dem Führerstand jeweils mindestens ein Paar von Tracksystemen (21, 22; 23, 24) vorgesehen ist, die steuerbar sind, wobei optional die besagten Tracksysteme (21, 22; 23, 24) parallel ausrichtbar und dann unlenkbar feststellbar sind, wobei diese Feststellung für das Paar von steuerbaren Tracksystemen, welches jeweils in der durch die Führerstandausrichtung vorgegebenen Rückwärtsfahrtrichtung angeordnet ist, einstellbar ist.
